# EUROPÄISCHE PATENTSCHRIFT

(11) **EP 2 209 654 B1**
(45) Veröffentlichungstag und Bekanntmachung des Hinweises auf die Patenterteilung: **07.05.2014**
(21) Anmeldenummer: 08845055.6
(22) Anmeldetag: 16.10.2008
(51) Int. Cl.: B42D 25/00, B42D 15/00, B41M 3/14

(54) **MEHRLAGIGES SICHERHEITSDOKUMENT MIT MINDESTENS ZWEI FOLIENELEMENTEN SOWIE HERSTELLUNGSVERFAHREN**
MULTILAYERED SECURITY DOCUMENT HAVING AT LEAST TWO FILM ELEMENTS AND METHOD FOR THE PRODUCTION
DOCUMENT DE SÉCURITÉ MULTICOUCHE AVEC D'AU MOINS DEUX ÉLÉMENTS DE FILM ET PROCÉDÉ DE FABRICATION

(30) Priorität: 30.10.2007 DE 102007052176
(43) Veröffentlichungstag der Anmeldung: 28.07.2010
(73) Patentinhaber: OVD Kinegram AG, 6301 Zug (CH)
(72) Erfinder: HANSEN, Achim, CH-6300 Zug (CH); STREB, Christina, CH-5646 Abtwil (CH)
(74) Vertreter: Zinsinger, Norbert
(86) Internationale Anmeldenummer: PCT/EP2008/008759
(87) Internationale Veröffentlichungsnummer: WO 2009/056228

(56) Entgegenhaltungen:
- WO-A-03/097378
- WO-A-2006/018232
- WO-A-2006/087138
- WO-A-2006/095161
- WO-A-2006/108611
- DE-A- 2 845 400
- DE-A- 4 334 847
- DE-U- 29 621 588
- FR-A- 2 626 392
- US-A- 4 856 857
- US-A- 5 251 937

## Beschreibung

Die Erfindung betrifft ein Sicherheitsdokument mit einem Trägersubstrat und mindestens einem, am Trägersubstrat befestigten ersten Folienelement, das einen von einer diffraktiven ersten Reliefstruktur generierten, ersten optisch variablen Effekt zeigt, wobei das Sicherheitsdokument weiterhin mindestens eine, auf das mindestens eine erste Folienelement bereichsweise aufgebrachte erste Druckfarbenschicht aufweist. Die Erfindung betrifft weiterhin ein Verfahren zur Herstellung eines solchen Sicherheitsdokuments.

Sicherheitsdokumente der oben genannten Art sind aus US 4,856,857 hinreichend bekannt. Hier werden transparente Folienelemente, die ein Hologramm zeigen, auf dem Substrat eines Sicherheitsdokuments, z.B. eines Einlagenzertifikats, einer Magnetkarte und einer Kreditkarte befestigt. Das Sicherheitsdokument weist weiterhin einen visuell erfassbaren Anzeigebereich mit einem Buchstaben- oder Bildmuster auf, das z.B. persönliche Daten des Inhabers des Sicherheitsdokuments zeigt und unmittelbar auf oder im Substrat angeordnet ist und vom transparenten Folienelement zumindest teilweise bedeckt ist. Ein solches Buchstaben- oder Bildmuster kann sich auch auf dem Folienelement befinden oder in den Schichtaufbau des Folienelements integriert sein. Der grundsätzliche Schichtaufbau des Folienelements weist eine transparente Schicht auf, die auf einer ihrer beiden Seiten eine, ein Hologramm generierende Reliefstruktur aufweist und an einen Dünnfilm bzw. eine Reflektionsschicht angrenzt, wobei die Brechungsindizes der transparenten Schicht und des Dünnfilms unterschiedlich sind. Das Sicherheitsdokument inklusive des Folienelements wird mit einer durchsichtigen Schutzschicht überzogen oder zwischen solchen Schutzschichten einlaminiert.

Es hat sich gezeigt, dass die bekannten Sicherheitsdokumente manipuliert oder gefälscht werden können, indem das Substrat ausgehend von der Rückseite abgeschliffen wird, bis das Folienelement, gegebenenfalls inklusive der Schutzschicht, vorliegt. Anschließend kann das Folienelement auf ein anderes Substrat aufgeklebt werden, das vorab mit den gewünschten Daten versehen wurde. Sind auf dem Folienelement oder zwischen dem Folienelement und einer Schutzschicht ebenfalls Buchstaben- oder Bildmuster angeordnet, können diese vorab ausgehend von der, dem Substrat abgewandten Seite des Folienelements, gegebenenfalls inklusive der Schutzschicht, abgeschliffen oder abgelöst werden. Danach erfolgt z.B. ein neuer Auftrag veränderter Buchstaben-oder Bildmuster auf das Folienelement, das Aufbringen einer neuen Schutzschicht und das oben beschriebene Abschleifen des Substrats ausgehend von dessen Rückseite.

Alternativ kann ein Sicherheitsdokument manipuliert werden, indem die Schutzschicht inklusive des Folienelements von Substrat abgehoben wird, ein dünnes Blatt mit den gewünschten Daten eingeschoben wird und der Verbund, z.B. durch Laminieren, wieder hergestellt wird. Ist das Folienelement auf dem Sicherheitsdokument nicht durch eine durchsichtige Schutzschicht geschützt, kann dieses mit einer klebenden durchsichtigen Folie abgehoben werden, die Daten auf dem Substrat manipuliert werden und das Folienelement inklusive der durchsichtigen Folie, zugeschnitten auf die Größe des Folienelements, wieder aufgebracht werden. Die WO 03/097378 A2 beschreibt ein Sicherheitselement in Form eines Streifens, der als Übertragungslage auf die Oberfläche eines Substrats aufgeprägt wird.

Der Streifen wird als ein flächenmäßig begrenztes Sicherheitselement vorgesehen, also auch nur auf einen Teil des Flächenbereichs appliziert. Der Streifen seinerseits ist so ausgebildet, dass nur in bestimmten Flächenbereichen eine optisch wirksame Struktur oder Schicht angeordnet ist. Der restliche Bereich des Streifens ist so gestaltet, dass er vom Betrachter nicht oder kaum von der Oberfläche des Substrats unterschieden werden kann, z.B. durch transparente Ausbildung des restlichen Bereichs.

In einer Ausführungsform wird auf den applizierten Streifen ein Aufdruck aufgebracht, der sich jenseits des Streifens auf dem Substrat fortsetzt.

Die DE 28 45 400 A1 beschreibt eine Ausweiskarte mit einer reliefartigen Oberfläche, bestehend aus einem Kartengrundaufbau und einer Deckfolie. Der Kartengrundaufbau besteht aus einer oberen und einer unteren Foliendeckschicht, zwischen denen sich ein mit kundenspezifischen Kartendaten bedruckter Papier- oder Kunststoffrohling befindet. Die Deckfolie ist z.B. als eine dünne Zellophan- oder PVC-Folie ausgebildet, und auch sie wird in Stahltiefdrucktechnik als ein Sicherheitsdruckbild aufgebracht, das das Oberflächenrelief bildet.

Die WO 2006/108611 A2 beschreibt einen als Übertragungslage einer Transferfolie ausgebildeten Mehrschichtkörper mit einem Oberflächenrelief, der als Sicherheitselement zum Schutz von Dokumenten verwendbar ist. Der Mehrschichtkörper umfasst eine transparente Strukturschicht, in der das Oberflächenrelief mit Hilfe einer Master-Reliefstruktur abgeformt ist und mittels einer Kleberschicht auf einem Trägerkörper befestigt wird wie z.B. in einem Heißprägeverfahren.

Die WO 2006/095161 A2 beschreibt ein Sicherheitselement mit mindestens zwei Bereichen, wobei jeder Bereich eine prismatische Oberflächenstruktur aufweist. Bei Betrachtung unter einem ersten Winkel ist ein Bereich aufgrund von Totalreflexion im Prisma reflektierend, bei Betrachtung unter einem zweiten Winkel ist der Bereich transparent. Die Bereiche können so angeordnet sein, dass sie separate Bilder oder Komponenten eines Bildes ausbilden. Das Sicherheitselement kann als Folie ausgebildet sein und auf einem Papier- oder Kunststoffsubstrat eingesetzt werden.

Die DE-U 296 215 88 beschreibt eine aus mehreren Kunststofffolien aufgebaute Plastikkarte mit einem Chip.

Die WO 2006/018232 A1 offenbart die Aufbringung einer Beschichtung auf eine Prägestruktur mittels eines Inkjet-Druckverfahrens. Die Beschichtung stellt eine Information bereit.

Es ist nun Aufgabe der Erfindung, Sicherheitsdokumente bereitzustellen, die vor den oben aufgeführten Manipulationen besser geschützt sind, und ein Verfahren zur Herstellung solcher Sicherheitsdokumente anzugeben.

Die Aufgabe wird durch ein Sicherheitsdokument mit einem Trägersubstrat und mindestens einem, am Trägersubstrat befestigten ersten Folienelement, das einen von einer diffraktiven ersten Reliefstruktur generierten, ersten optisch variablen Effekt zeigt, wobei das Sicherheitsdokument weiterhin mindestens eine, auf das mindestens eine erste Folienelement bereichsweise aufgebrachte erste Druckfarbenschicht aufweist, gelöst,
indem die mindestens eine erste Druckfarbenschicht weiterhin bereichsweise auf das Trägersubstrat aufgebracht ist, wobei die auf das mindestens eine erste Folienelement und die auf das Trägersubstrat aufgebrachten Bereiche der mindestens einen ersten Druckfarbenschicht zusammen eine auslesbare erste Information bereitstellen,
indem das Sicherheitsdokument mindestens ein zweites Folienelement aufweist, das einen von einer diffraktiven zweiten Reliefstruktur generierten, zweiten optisch variablen Effekt zeigt, wobei das mindestens eine zweite Folienelement transparent oder zumindest bereichsweise transparent ist, und
indem das mindestens eine zweite Folienelement zumindest bereichsweise auf dem mindestens einen ersten Folienelement und weiterhin auf vom mindestens einen ersten Folienelement freien Bereichen des Trägersubstrats befestigt ist, wobei zumindest Bereiche der mindestens einen ersten Druckfarbenschicht zwischen dem mindestens einen ersten Folienelement und dem mindestens einen zweiten Folienelement angeordnet und durch das mindestens eine zweite Folienelement hindurch auslesbar sind.

Das erfindungsgemäße Sicherheitsdokument ist besonders effektiv vor Manipulation geschützt, da die erste Information auf ihrer dem Trägersubstrat zugewandten Seite durch das mindestens eine erste Folienelement geschützt ist und die erste Information auf ihrer dem Trägersubstrat abgewandten Seite durch das mindestens eine zweite Folienelement geschützt ist. Dabei sind Bereiche der ersten Information sowohl durch ein erstes als auch durch ein zweites Folienelement geschützt, da sie zwischen den Folienelementen eingebettet angeordnet sind. Die eingebetteten Bereiche der ersten Information können allein durch ein Abschleifen des Trägersubstrats nicht entfernt werden, sondern es muss auch das mindestens eine erste Folienelement entfernt werden, dessen Reproduktion nur mit hohem technischem Aufwand oder gar unmöglich ist. Der Zugang zu den eingebetteten Bereichen der ersten Information ist auch von der anderen Seite, nämlich durch das mindestens eine zweite Folienelement versperrt, so dass hier das mindestens eine zweite Folienelement entfernt werden müsste, dessen Reproduktion ebenfalls nur mit hohem technischem Aufwand oder gar unmöglich ist. Somit ist zumindest der zwischen dem mindestens einen ersten Folienelement und dem mindestens einen zweiten Folienelement eingebettete Teil der ersten Information einer Manipulation nicht zugänglich, so dass eine Verwendung des isolierten Verbunds aus dem mindestens einen ersten Folienelement und dem mindestens einen zweiten Folienelement zur Aufbringung auf gefälschte oder manipulierte Sicherheitsdokumente nicht in Frage kommt.

Der durch die erste oder zweite diffraktive Reliefstruktur erzeugte, optisch variable Effekt kann sich am jeweiligen Folienelement z.B. in einem blickwinkelabhängigen Farbwechseleffekt und/oder Kontrastwechsel und/oder Motivwechsel und einer Ausbildung einer holographischen oder kinematographischen Darstellung äußern.

Das erste und das zweite Folienelement können prinzipiell entweder durch eine, auf ein Trägersubstrat auflaminierbare, selbsttragende Laminierfolie gebildet sein oder durch eine dünne, nicht selbsttragende Übertragungslage einer Transferfolie gebildet sein. Eine Transferfolie weist eine Trägerfolie und darauf die nicht selbsttragende Übertragungslage auf, die sich üblicherweise aus mehreren unterschiedlichen dünnen Schichtlagen zusammensetzt und von der Trägerfolie ablösbar ist. Die Transferfolie wird mittels eines Werkzeugs gegen das Trägersubstrat gedrückt, wobei ein Bereich der Übertragungslage am Trägersubstrat haften bleibt. Beim Abziehen der Trägerfolie vom zu sichernden Trägersubstrat verbleibt der angedrückte Bereich der Übertragungslage unmittelbar oder mittelbar am Trägersubstrat haften und bildet ein dünnes Folienelement, üblicherweise mit einer Foliendicke im Bereich von 3 bis 25 µm. Eine Laminierfolie weist im Vergleich dazu eine wesentlich höhere Foliendicke, üblicherweise im Bereich von 15 bis 250 µm auf, wobei sich auch die Laminierfolie üblicherweise aus mehreren unterschiedlichen Schichtlagen zusammensetzt.

Die mindestens eine erste Druckfarbenschicht ist vorzugsweise auf das mindestens eine erste Folienelement und das Trägersubstrat aufgedruckt. Alternativ kann die mindestens eine erste Druckfarbenschicht aber auch auf das mindestens eine zweite Folienelement aufgedruckt sein und zusammen mit diesem auf das mindestens eine erste Folienelement und das Trägersubstrat aufgebracht werden.

Ein Drucken der mindestens einen ersten Druckfarbenschicht erfolgt vorzugsweise in einem Inkjet-Druckverfahren, jedoch sind auch andere Druckverfahren wie Tiefdruck und Siebdruck verwendbar. Die mindestens eine erste Druckfarbenschicht wird vorzugsweise gebildet, indem mindestens ein wässriges Druckfarbenmedium verdruckt und anschließend getrocknet wird.

Es hat sich als vorteilhaft erwiesen, wenn das mindestens eine erste Folienelement eine Foliendicke im Bereich von 3 bis 25 µm aufweist. Derart dünne Folienelemente können in einfacher Weise mit der mindestens einen ersten Druckfarbenschicht überdruckt werden, ohne dass es im Bereich des Umfangs des ersten Folienelements zu einer Verzerrung oder Beeinträchtigung des Druckbildes kommt.

Insbesondere die Verwendung einer Transferfolie, die eine Trägerfolie und eine davon ablösbare Übertragungslage aufweist, zur Bildung des mindestens einen ersten Folienelements auf dem Trägersubstrat ist ideal, da Übertragungslagen besonders dünn und mit dem gewünschten Schichtaufbau zur Bildung des ersten Folienelements ausgebildet werden können.

Das mindestens eine erste Folienelement weist mindestens eine transparente erste Kunststoff- oder Lackschicht und mindestens eine erste Reflektionsschicht auf, wobei die diffraktive erste Reliefstruktur in einer ersten Grenzfläche zwischen der mindestens einen ersten Kunststoff- oder Lackschicht und der mindestens einen ersten Reflektionsschicht abgeformt ist, insbesondere durch Prägen.

Das mindestens eine erste Folienelement kann opak, semitransparent oder bereichsweise oder vollständig transparent ausgebildet sein. Die erste Reflektionsschicht muss entsprechend dazu opak, semitransparent oder transparent ausgebildet sein. Zur Bildung opaker Reflektionsschichten eigenen sich metallische Schichten, insbesondere aus Aluminium, Silber, Gold, Kupfer und Nickel. Zur Bildung transparenter Reflektionsschichten wird auf die US 4,856,857 verwiesen, wo eine große Anzahl transparenter Reflektionsschichten aus metallischen oder dielektrischen Materialien ausführlich beschrieben sind. Besonders bevorzugt ist hierbei die Verwendung von ZnS, ZnO, TiO₂, SiO₂ und In₂O₃ zur Bildung einer transparenten Reflektionsschicht. Semitransparente Reflektionsschichten werden beispielsweise ausgebildet, indem eine opake Reflektionsschicht partiell entfernt wird, so dass die Reflektionsschicht in Form eines Gitters, Linienrasters oder Punktrasters vorliegt.

Es hat sich als vorteilhaft erwiesen, wenn das mindestens eine zweite Folienelement eine Foliendicke im Bereich von 3 bis 250 µm aufweist. Das mindestens eine zweite Folienelement ist vorzugsweise durch eine nicht selbsttragende, dünne Übertragungslage einer Transferfolie oder durch eine selbsttragende Laminierfolie ausgebildet.

Vorzugsweise weist auch das mindestens eine zweite Folienelement mindestens eine transparente zweite Kunststoff- oder Lackschicht und mindestens eine transparente oder bereichsweise ausgeformte opake zweite Reflektionsschicht auf, wobei die diffraktive zweite Reliefstruktur in einer Grenzfläche zwischen der mindestens einen zweiten Kunststoff- oder Lackschicht und der mindestens einen zweiten Reflektionsschicht abgeformt ist.

Alternativ kann das mindestens eine zweite Folienelement auch nur die mindestens eine transparente zweite Kunststoff- oder Lackschicht umfassen. In diesem Fall grenzt die diffraktive zweite Reliefstruktur nicht an eine auf die Kunststoff- oder Lackschicht aufgebrachte Reflektionsschicht an, sondern stattdessen an Luft, wobei die Luft wie eine Reflektionsschicht wirkt, sofern der Unterschied zwischen dem Brechungsindex der Luft und dem der Kunststoff- oder Lackschicht ausreichend groß ist.

Das mindestens eine zweite Folienelement kann bereichsweise oder vollständig transparent ausgebildet sein, wobei hier ein Bereich des zweiten Folienelements als transparent bezeichnet wird, wenn zumindest die darunter angeordnete Teite der ersten Information durch das zweite Folienelement hindurch visuell lesbar sind. Die erste Reflektionsschicht muss entsprechend dazu semitransparent oder transparent ausgebildet sein. Zur Bildung transparenter Reflektionsschichten wird auch hier auf die US 4,856,857 verwiesen, wo eine große Anzahl transparenter Reflektionsschichten aus metallischen oder dielektrischen Materialien ausführlich beschrieben sind. Besonders bevorzugt ist hierbei die Verwendung von ZnS, ZnO, TiO₂, SiO₂ und In₂O₃ zur Bildung einer transparenten Reflektionsschicht. Semitransparente Reflektionsschichten werden beispielsweise ausgebildet, indem eine opake Reflektionsschicht partiell entfernt wird, so dass die Reflektionsschicht in Form eines Muster, Gitters, Linienrasters oder Punktrasters vorliegt.

Das erste und das zweite Folienelement können weitere, vollflächig oder musterförmig ausgebildete Schichten umfassen, wie eine Kleberschicht zur Befestigung des Folienelements, wie mindestens eine Haftvermittlerschicht, beispielsweise um ein Anhaften der mindestens einen ersten Druckfarbenschicht an der Oberfläche des ersten Folienelements oder den inneren Zusammenhalt eines Folienelements sicherzustellen, wie eine magnetische Schicht, wie eine elektrisch leitende Schicht, wie eine optisch variable Schicht, worunter beispielsweise Flüssigkristallschichten, lumineszierende Schichten und photochrome Schichten fallen, sowie Farbschichten.

Es hat sich bewährt, wenn die erste Information, die durch die mindestens eine erste Druckfarbenschicht erzeugt wird, persönliche Daten eines Inhabers des Sicherheitsdokuments bereitstellt. Als persönliche Daten werden der Name, die Adresse, das Geburtsdatum, ein Bild oder biometrische Daten des Inhabers des Sicherheitsdokuments angesehen. Als biometrische Daten des Inhabers werden insbesondere die Körpergröße, die Augenfarbe, der Irisabdruck, ein Fingerabdruck und ein Handabdruck verwendet. Dabei können mehrere persönliche Daten des Inhabers in Kombination miteinander die erste Information ausbilden. Die erste Information kann auch durch persönliche Daten des Inhabers des Sicherheitsdokuments bereitgestellt sein, die in Form einer Kodierung vorliegen bzw. kodiert sind, insbesondere in Form eines Barcodes.

Die mindestens eine erste Druckfarbenschicht ist vorzugsweise unter Normalbeleuchtung betrachtet farbig opak. Es hat sich aber genauso bewährt, wenn die mindestens eine erste Druckfarbenschicht unter Normalbeleuchtung betrachtet farblos transparent ist und lumineszierende Stoffe enthält, die unter UV-Bestrahlung im sichtbaren Wellenlängenbereich farbig emittieren. Auch eine Kombination farbig opaker Druckfarbenschichten und farblos transparenter, UV-lumineszierender Druckfarbenschichten hat sich bewährt. Dabei kann die mindestens eine erste Druckfarbenschicht ein Halbtonbild bereitstellen, wobei die einzelnen Druckfarben derart punktförmig und im Raster verdruckt sind, dass mit einem unbewaffneten menschlichen Auge die einzelnen Druckfarbenpunkte nicht einzeln aufgelöst bzw. wahrgenommen werden können. Mindestens zwei verschiedene Farbtöne sind bereits ausreichend, um für den Betrachter den Eindruck zu erzeugen, dass es sich um ein oder nahezu ein Vollfarben- bzw. Echtfarbenbild handelt. Vorzugsweise werden aber mindestens drei unterschiedliche Farbtöne verdruckt, beispielsweise Rot, Grün und Blau oder Cyan, Magenta und Gelb, gegebenenfalls jeweils in Kombination mit Schwarz und/oder Weiß.

Das mindestens eine erste Folienelement und das mindestens eine zweite Folienelement können jeweils alphanumerische Zeichen, Symbole, Logos, bildliche oder figürliche Darstellungen, einen Schriftzug, eine Nummernfolge, ein graphisches Muster, eine Kodierung wie einen Barcode zeigen. Der erste optisch variable Effekt und der zweite optisch variable Effekt können dabei unabhängig voneinander sein.

Es hat sich allerdings bewährt, wenn der erste optisch variable Effekt und der zweite optisch variable Effekt so aufeinander abgestimmt sind, dass das mindestens eine erste Folienelement und das mindestens eine zweite Folienelement zusammen eine zweite Information bereitstellen. So kann beispielsweise das mindestens eine erste Folienelement Teile einer bildlichen Darstellung bereitstellen und das mindestens eine zweite Folienelement die restlichen Teile dieser bildlichen Darstellung bereitstellen, wobei hier eine exakte und lagegenaue Ausrichtung der Folienelemente zueinander erforderlich ist, damit sich für den Betrachter des Sicherheitselements die einzelnen Bildteile zu der gesamten bildlichen Darstellung ergänzen. Als zweite Information können auch Moiré-Effekte erzeugt werden.

Eine derart lagegenaue Ausrichtung der Folienelemente zueinander ist aufwendig und daher kaum reproduzierbar. Insbesondere hat es sich als vorteilhaft erwiesen, wenn auch die zweite Information persönliche Daten eines Inhabers des Sicherheitsdokuments bereitstellt. Vorzugsweise stellt die zweite Information eine holographische oder kinematographische Darstellung bereit.

Es ist bevorzugt, wenn mindestens zwei erste Folienelemente vorhanden sind. Weiterhin hat es sich bewährt, wenn mindestens zwei zweite Folienelemente vorhanden sind.

Besonders bevorzugt ist es, wenn die Umrissformen des mindestens einen ersten Folienelements und des mindestens einen zweiten Folienelements aufeinander abgestimmt sind und/oder wenn die Umrissformen von mehreren ersten Folienelementen zueinander abgestimmt sind und/oder die Umrissformen von mehrere zweiten Umrissformen aufeinander abgestimmt sind. So kann beispielsweise der Umriss des mindestens einen ersten Folienelements einen Baumstamm mit verzweigten Ästen darstellen und die Umrisse von mehreren zweiten Folienelementen Blätter bilden, um z.B. einen Baum darzustellen.

Zur weiteren Erhöhung des Schutzes vor Manipulation oder Nachahmung weist das Sicherheitsdokument insbesondere mindestens einen IC-Mikrochip auf. Der IC-Mikrochip kann dabei einen Chipaufbau mit Kontakten aufweisen oder kontaktlos ausgebildet sein. Dabei hat es sich bewährt, wenn das mindestens eine erste Folienelement und/oder das mindestens eine zweite Folienelement eine elektrisch leitende Schichtlage aufweisen, die mit dem IC-Mikrochip elektrisch leitend verbunden ist/sind. Die elektrisch leitende Schichtlage kann z.B. eine Antennenstruktur und eine Kapazität ausbilden.

Vorzugsweise ist auf das Trägersubstrat mindestens eine zweite Druckfarbenschicht bereichsweise aufgedruckt, die zumindest zwischen dem Trägersubstrat und dem mindestens einen ersten Folienelement angeordnet ist. Mittels der mindestens einen zweiten Druckfarbenschicht werden bevorzugt allgemeine, sich für jedes Sicherheitselement vom gleichen Typ wiederholende Angaben aufgebracht, wie die Bezeichnung des/der das Sicherheitsdokument ausgebenden Unternehmens, Behörde, Bundeslandes oder Landes. Mit der mindestens einen zweiten Druckfarbenschicht kann weiterhin oder alternativ eine graphische Gestaltung oder Musterung des Trägersubstrats erfolgen.

Das Trägersubstrat ist bevorzugt aus mindestens einer Lage Papier und/oder aus mindestens einer Kunststofffolie und/oder aus mindestens einer Metallfolie gebildet. Bevorzugt ist das Trägersubstrat zumindest bereichsweise transparent ausgebildet, wobei es vorteilhaft ist, wenn ein solcher transparenter Bereich mit mindestens einem der Folienelemente überlappt, so dass auch auf der Rückseite des Sicherheitsdokuments ein optisch variabler Effekt erkennbar ist.

Es hat sich bewährt, wenn das mindestens eine zweite Folienelement auf seiner dem mindestens einen ersten Folienelement abgewandten seite eine weitere Reliefstruktur aufweist. Eine derartige weitere Reliefstruktur ist insbesondere als makroskopische und/oder mikroskopische Reliefstruktur ausgeführt. Die weitere Reliefstruktur ist vorzugsweise visuell und/oder haptisch erfassbar. Die weitere Reliefstruktur kann dabei z.B ein Muster, eine Guillochenstruktur, eine Linsenstruktur, eine Mattstrukur und eine diffraktive Struktur oder eine Kombination dieser ausbilden.

Das Sicherheitsdokument ist insbesondere ein Ausweis, ein Reisepass, eine Identifikationskarte, eine Bankkarte, ein Führerschein, ein Wertpapier, eine Banknote, ein Lotterielos, ein Ticket, ein Zertifikat, ein Zeugnis oder ein Etikett zur Warensicherung und/oder Warenrückverfolgung.

Zur Herstellung eines erfindungsgemäßen Sicherheitsdokuments hat sich ein Verfahren umfassend folgende Schritte bewährt:
- Bereitstellen des Trägersubstrats;
- Bereitstellen einer Transferfolie, die eine Trägerfolie und eine von der Trägerfolie ablösbare Übertragungslage aufweist,
- Befestigen von Bereichen der Übertragungslage der Transferfolie auf dem Trägersubstrat, welche das mindestens eine erste Folienelement ausbilden,
- Bedrucken des mindestens einen ersten Folienelements und davon freier Bereiche des Trägersubstrats oder Bedrucken des mindestens einen zweiten Folienelements mit der mindestens einen ersten Druckfarbenschicht;
- Befestigen des mindestens einen zweiten Folienelements auf dem mindestens einen ersten Folienelement und davon freien Bereichen des Trägersubstrats derart, dass zumindest Bereiche der mindestens einen ersten Druckfarbenschicht zwischen dem mindestens einen ersten Folienelement und dem mindestens einen zweiten Folienelement angeordnet und durch das mindestens eine zweite Folienelement hindurch auslesbar sind.

Das Verfahren eignet sich insbesondere zur kontinuierlichen Herstellung von Sicherheitsdokumenten, insbesondere in einem Rolle zu Rolle - Verfahren, bei dem das Trägersubstrat bandförmig verarbeitet wird.

Die Übertragungslage der Transferfolie wird bereichsweise auf das Trägersubstrat übertragen werden, indem die Transferfolie vorzugsweise geprägt wird. Dabei wird die Transferfolie mittels eines Prägewerkzeugs gegen das Trägersubstrat gedrückt und mittels einer Kleberschicht am Trägersubstrat befestigt. Die Kleberschicht kann dabei, insbesondere partiell, auf das Trägersubstrat aufgebracht sein, oder auf der, dem Trägersubstrat zugewandten Seite der Übertragungslage vollflächig oder partiell angeordnet sein. Das Prägewerkzeug kann als Prägestempel mit einem definierten Umriss oder als Prägewalze mit strukturierter oder glatter Oberfläche ausgebildet sein.

Besonders bevorzugt ist es, wenn das mindestens eine erste Folienelement und/oder das mindestens eine zweite Folienelement eine Foliendicke im Bereich von 3 bis 25 µm aufweist und auf das Trägersubstrat geprägt wird. Insbesondere werden erste und zweite Folienelemente mittels Transferfolientechnik dünn ausgebildet.

Alternativ ist es aber genauso möglich, dass das mindestens eine erste Folienelement eine Foliendicke im Bereich von 3 bis 25 µm aufweist und auf das Trägersubstrat geprägt wird, und dass das mindestens eine zweite Folienelement eine Foliendicke im Bereich von 15 bis 250 µm aufweist und auf das mindestens eine erste Folienelement und davon freie Bereiche des Trägersubstrat laminiert wird.

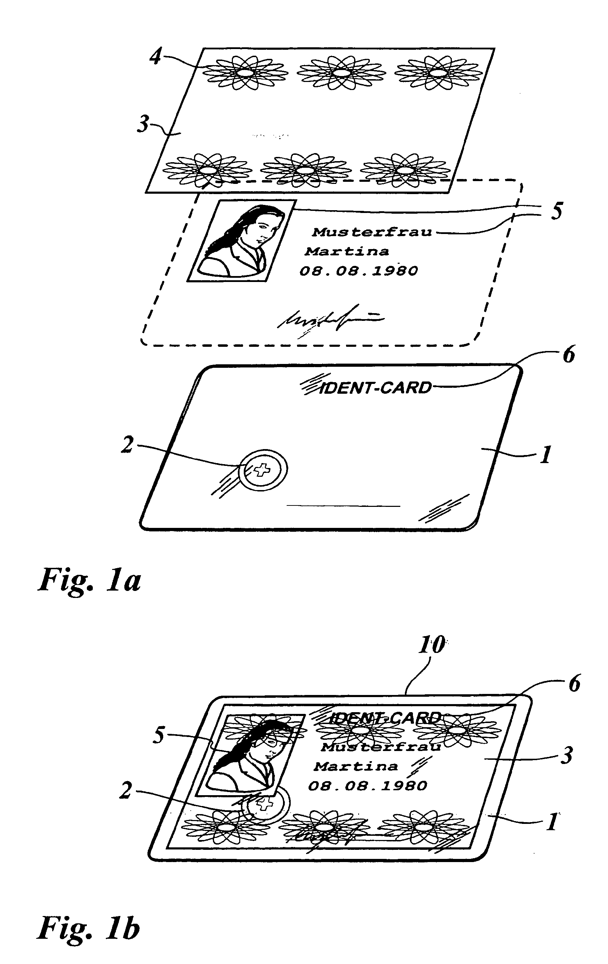

Die Figuren 1a und 1b sollen ein erfindungsgemäßes Sicherheitsdokument beispielhaft erläutern. So zeigt
- Figur 1a: die einzelnen Lagen zur Bildung eines Sicherheitsdokuments in dreidimensionaler Darstellung und
- Figur 1b: das aus den Lagen gemäß Figur 1a gebildete Sicherheitsdokument in dreidimensionaler Darstellung.

Figur 1a zeigt in dreidimensionaler Darstellung die einzelnen Lagen zur Bildung eines Sicherheitsdokuments 10 (siehe Figur 1 b) in Form einer ID-Karte. Ein Trägersubstrat 1 aus Teslin (synthetisches Druckmedium) bildet eine erste Lage, auf welcher eine zweite Druckfarbenschicht 6 aufgedruckt ist, die den Schriftzug "IDENT-CARD" ausbildet. Weiterhin ist ein rundes erstes Folienelement 2 auf das Trägersubstrat 1 unter Verwendung einer Transferfolie aufgeprägt, wobei das erste Folienelement 2 ein Hologramm zeigt. Auf das demgemäß vorbereitete Trägersubstrat 1 wird eine erste Druckfarbenschicht 5 gebildet, indem im Inkjet-Verfahren wässrige Druckfarbe aufgedruckt und getrocknet wird, wobei die erste Druckfarbenschicht 5 als erste Information persönliche Daten der Inhaberin des Sicherheitsdokuments 10 zeigt, wie den Namen, das Geburtsdatum, die Unterschrift und ein Bild. Die Oberfläche des aufgeprägten ersten Folienelements 2 muss dabei für die wässrige Druckfarbe ausreichend bedruckbar sein. Die erste Druckfarbenschicht 5 überlappt dabei im Bereich des Bildes mit dem ersten Folienelement 2. Darüber wird ein transparentes zweites Folienelement 3 geklebt, das die erste Druckfarbenschicht 5 und das erste Folienelement 2 vollständig überdeckt. Das zweite Folienelement 3 weist eine diffraktive Reliefstruktur 4 auf, die einen kinematographischen, optisch variablen Effekt erzeugt. Teile der ersten Druckfarbenschicht 5 (hier insbesondere des Bildes) befinden sich zwischen dem ersten Folienelement 2 und dem zweiten Folienelement 3 eingebettet und sind somit einer Manipulation weder ausgehend von der Rückseite des Sicherheitsdokuments 10 noch ausgehend von der in Figur 1b dargestellten Vorderseite zugänglich.

Die Umrissformen der ersten und zweiten Folienelemente, deren Anordnung zueinander sowie deren Grad an Überlappung zueinander und in Bezug auf die erste Druckfarbenschicht sind in weiten Grenzen wählbar, wie auch die Ausgestaltung der ersten Druckfarbenschicht selbst, so dass eine Vielzahl weiterer Möglichkeiten besteht, das erfindungsgemäße Sicherheitsdokument auszubilden. So kann das mindestens eine erste Foldenelement eine Seite des Trägersubstrats vollständig oder nur teilweise bedecken und einen graphisch gestalteten Umriss aufweisen.

Das mindestens eine zweite Folienelement kann das mindestens eine erste Folienelement vollständig oder lediglich teilweise bedecken, kann die mindestens eine erste Druckfarbenschicht vollständig oder lediglich teilweise bedecken, kann ebenfalls einen graphisch gestalteten Umriss aufweisen und kann weiterhin nur ein erstes Folienelement oder eine Anzahl an ersten Folienelementen aus einer Vielzahl an ersten Folienelementen bedecken oder teilweise bedecken.

## Patentansprüche

1. Sicherheitsdokument (10) mit einem Trägersubstrat (1) und mindestens einem, am Trägersubstrat (1) befestigten ersten Folienelement (2), das einen von einer diffraktiven ersten Reliefstruktur generierten, ersten optisch variablen Effekt zeigt, wobei das Sicherheitsdokument (10) weiterhin mindestens eine, auf das mindestens eine erste Folienelement (2) bereichsweise aufgebrachte erste Druckfarbenschicht (5) aufweist, wobei
die mindestens eine erste Druckfarbenschicht (5) weiterhin bereichsweise auf das Trägersubstrat (1) aufgebracht ist, und wobei die auf das mindestens eine erste Folienelement (2) und die auf das Trägersubstrat (1) aufgebrachten Bereiche der mindestens einen ersten Druckfarbenschicht (5) zusammen eine auslesbare erste Information bereitstellen,
**dadurch gekennzeichnet,**
**dass** das Sicherheitsdokument (10) mindestens ein zweites Folienelement (3) aufweist, das einen von einer diffraktiven zweiten Reliefstruktur (4) generierten, zweiten optisch variablen Effekt zeigt, wobei das mindestens eine zweite Folienelement (3) transparent oder zumindest bereichsweise transparent ist, und dass das mindestens eine zweite Folienelement (3) zumindest bereichsweise auf dem mindestens einen ersten Folienelement (2) und weiterhin auf vom mindestens einen ersten Folienelement (2) freien Bereichen des Trägersubstrats (1) befestigt ist, wobei zumindest Bereiche der mindestens einen ersten Druckfarbenschicht (5) zwischen dem mindestens einen ersten Folienelement (2) und dem mindestens einen zweiten Folienelement (3) angeordnet und durch das mindestens eine zweite Folienelement (3) hindurch auslesbar sind.

2. Sicherheitsdokument nach Anspruch 1,
**dadurch gekennzeichnet,**
**dass** die erste Information durch persönliche Daten eines Inhabers des Sicherheitsdokuments (10) bereitgestellt ist.

3. Sicherheitsdokument nach einem der Ansprüche 1 bis 2,
**dadurch gekennzeichnet,**
**dass** der erste optisch variable Effekt und der zweite optisch variable Effekt so aufeinander abgestimmt sind, dass das mindestens eine erste Folienelement (2) und das mindestens eine zweite Folienelement (3) zusammen eine zweite Information bereitstellen.

4. Sicherheitsdokument nach Anspruch 3,
**dadurch gekennzeichnet,**
**dass** die zweite Information persönliche Daten eines Inhabers des Sicherheitsdokuments (10) bereitstellt.

5. Sicherheitsdokument nach Anspruch 3 oder 4,
**dadurch gekennzeichnet,**
**dass** die zweite Information eine holographische oder kinematographische Darstellung bereitstellt.

6. Sicherheitsdokument nach einem der Ansprüche 1 bis 5,
**dadurch gekennzeichnet,**
**dass** das Sicherheitsdokument (10) mindestens einen IC-Mikrochip aufweist und dass das mindestens eine erste Folienelement (2) und/oder das mindestens eine zweite Folienelement (3) eine elektrisch leitende Schichtlage aufweisen, die mit dem IC-Mikrochip elektrisch leitend verbunden ist/sind.

7. Sicherheitsdokument nach einem der Ansprüche 1 bis 6,
**dadurch gekennzeichnet,**
**dass** die mindestens eine erste Druckfarbenschicht (5) auf das mindestens eine erste Folienelement (2) und das Trägersubstrat (1) aufgedruckt ist.

8. Sicherheitsdokument nach einem der Ansprüche 1 bis 6,
**dadurch gekennzeichnet,**
**dass** die mindestens eine erste Druckfarbenschicht (5) auf das mindestens eine zweite Folienelement (3) aufgedruckt ist.

9. Sicherheitsdokument nach einem der Ansprüche 1 bis 8,
**dadurch gekennzeichnet,**
**dass** mindestens eine zweite Druckfarbenschicht (6) bereichsweise auf das Trägersubstrat (1) aufgedruckt ist.

10. Sicherheitsdokument nach einem der Ansprüche 1 bis 9,
**dadurch gekennzeichnet,**
**dass** die mindestens eine erste Druckfarbenschicht (5) unter Normalbeleuchtung betrachtet farblos transparent ist und lumineszierende Stoffe enthält, die unter UV-Bestrahlung im sichtbaren Wellenlängenbereich farbig emittieren.

11. Sicherheitsdokument nach einem der Ansprüche 1 bis 10,
**dadurch gekennzeichnet,**
**dass** das mindestens eine erste Folienelement (2) mindestens eine transparente erste Kunststoff- oder Lackschicht und mindestens eine erste Reflektionsschicht aufweist, wobei die diffraktive erste Reliefstruktur in einer ersten Grenzfläche zwischen der mindestens einen ersten Kunststoff- oder Lackschicht und der mindestens einen ersten Reflektionsschicht abgeformt ist.

12. Sicherheitsdokument nach einem der Ansprüche 1 bis 11,
**dadurch gekennzeichnet,**
**dass** das mindestens eine zweite Folienelement (3) mindestens eine transparente zweite Kunststoff- oder Lackschicht und mindestens eine transparente oder bereichsweise ausgeformte opake zweite Reflektionsschicht aufweist, wobei die diffraktive zweite Reliefstruktur in einer Grenzfläche zwischen der mindestens einen zweiten Kunststoff- oder Lackschicht und der mindestens einen zweiten Reflektionsschicht abgeformt ist.

13. Sicherheitsdokument nach einem der Ansprüche 1 bis 12,
**dadurch gekennzeichnet,**
**dass** mindestens zwei erste Folienelemente (2) vorhanden sind.

14. Sicherheitsdokument nach einem der Ansprüche 1 bis 13,
**dadurch gekennzeichnet,**
**dass** mindestens zwei zweite Folienelemente (3) vorhanden sind.

15. Verfahren zur Herstellung eines Sicherheitsdokuments (10) nach einem der Ansprüche 1 bis 14, mit den folgenden Schritten:
- Bereitstellen des Trägersubstrats (1);
- Bereitstellen einer Transferfolie, die eine Trägerfolie und eine von der Trägerfolie ablösbare Übertragungslage aufweist,
- Befestigen von Bereichen der Übertragungslage der Transferfolie auf dem Trägersubstrat (1), welche das mindestens eine erste Folienelement (2) ausbilden,
- Bedrucken des mindestens einen ersten Folienelements (2) und davon freier Bereiche des Trägersubstrats (1) oder Bedrucken des mindestens einen zweiten Folienelements (3) mit der mindestens einen ersten Druckfarbenschicht (5);
- Befestigen des mindestens einen zweiten Folienelements (3) auf dem mindestens einen ersten Folienelement (2) und davon freien Bereichen des Trägersubstrats (1) derart, dass zumindest Bereiche der mindestens einen ersten Druckfarbenschicht (5) zwischen dem mindestens einen ersten Folienelement (2) und dem mindestens einen zweiten Folienelement (3) angeordnet und durch das mindestens eine zweite Folienelement (3) hindurch auslesbar sind.

## Claims

1. Security document (10) having a carrier substrate (1) and
at least one first film element (2) fixed on the carrier substrate (1), said film element displaying a first optically variable effect that is generated by a diffractive first relief structure, wherein the security document (10) furthermore has at least one first printing ink layer (5) applied in certain regions to the at least one first film element (2), wherein
the at least one first printing ink layer (5) is furthermore applied in certain regions to the carrier substrate (1), and wherein the regions of the at least one first printing ink layer (5) that are applied to the at least one first film element (2) and the regions applied to the carrier substrate (1) together provide a first piece of readable information,
**characterised in that**,
the security document (10) has at least one second film element (3), which displays a second optically variable effect that is generated by a diffractive second relief structure (4), wherein the at least one second film element (3) is transparent or transparent at least in certain regions, and that the at least one second film element (3) is, at least in certain regions, fixed on the at least one first film element (2) and furthermore on regions of the carrier substrate (1) that are free from at least one first film element (2), wherein at least some regions of the at least one first printing ink layer (5) are arranged between the at least one first film element (2) and the at least one second film element (3) and can be read through the at least one second film element (3).

2. Security document according to claim 1,
**characterised in that**,
the first piece of information is provided by personal data about an owner of the security document (10).

3. Security document according to one of claims 1 to 2,
**characterised in that**,
the first optically variable effect and the second optically variable effect are attuned to each other in such a way that the at least one first film element (2) and the at least one second film element (3) together provide a second piece of information.

4. Security document according to claim 3,
**characterised in that**,
the second piece of information provides personal data about an owner of the security document (10).

5. Security document according to claim 3 or 4,
**characterised in that**,
the second piece of information provides a holographic or cinematographic depiction.

6. Security document according to one of claims 1 to 5,
**characterised in that**,
the security document (10) has at least one IC microchip and that the at least one first film element (2) and/or the at least one second film element (3) have/has (an) electrically conductive layer(s) that are/is connected to the IC microchip in an electrically conductive manner.

7. Security document according to one of claims 1 to 6,
**characterised in that**,
the at least one first printing ink layer (5) is imprinted onto the at least one first film element (2) and the carrier substrate (1).

8. Security document according to one of claims 1 to 6,
**characterised in that**,
the at least one first printing ink layer (5) is imprinted onto the at least one second film element (3).

9. Security document according to one of claims 1 to 8,
**characterised in that**,
at least one second printing ink layer (6) is imprinted onto the carrier substrate (1) in certain regions.

10. Security document according to one of claims 1 to 9,
**characterised in that**,
the at least one first printing ink layer (5), when observed under normal lighting, is colourlessly transparent and contains luminescent materials that emit colour in the presence of UV irradiation in the visible wavelength range.

11. Security document according to one of claims 1 to 10,
**characterised in that**,
the at least one first film element (2) has at least one transparent first plastic or lacquer layer and at least one first reflective layer, wherein the diffractive first relief structure is moulded into a first boundary layer between the at least one first plastic or lacquer layer and the at least one first reflective layer.

12. Security document according to one of claims 1 to 11,
**characterised in that**,
the at least one second film element (3) has at least one transparent second plastic or lacquer layer and at least one transparent or regionally formed, opaque second reflective layer, wherein the diffractive second relief structure is moulded into a boundary layer between the at least one second plastic or lacquer layer and the at least one second reflective layer.

13. Security document according to one of claims 1 to 12,
**characterised in that**,
at least two first film elements (2) are present.

14. Security document according to one of claims 1 to 13,
**characterised in that**,
at least two second film elements (3) are present.

15. Method for the production of a security document (10) according to one of claims 1 to 14, having the following steps:
- providing the carrier substrate (1);
- providing a transfer film that has a carrier film and a transfer layer that can be detached from the carrier film;
- fixing regions of the transfer layer of the transfer film onto the carrier substrate (1), which form the at least one first film element (2);
- marking the at least one first film element (2) and regions of the carrier substrate (1) that are free therefrom, or marking the at least one second film element (3) with the at least one first printing ink layer (5);
- fixing the at least one second film element (3) onto the at least one first film element (2) and regions of the carrier substrate (1) that are free therefrom, in such a way that at least some regions of the at least one first printing ink layer (5) are arranged between the at least one first film element (2) and the at least one second film element (3) and can be read through the at least one second film element (3).

## Revendications

1. Document de sécurité (10) comprenant un substrat de support (1) et au moins un premier élément pelliculaire (2) fixé au niveau du substrat de support (1), lequel élément pelliculaire affiche un effet à variation optique généré par une première structure diffractive en relief, sachant que le document de sécurité (10) présente en outre au moins une première couche d'encre d'impression (5) appliquée par endroits sur le premier élément pelliculaire (2) au moins au nombre d'un, sachant que :
la première couche d'encre d'impression (5) au moins au nombre d'une est en outre appliquée par endroits sur le substrat de support (1), et sachant que les zones, appliquées sur le premier élément pelliculaire (2) au moins au nombre d'un et sur le substrat de support (1), de la première couche d'encre d'impression (5) au moins au nombre d'une, fournissent ensemble une première information pouvant être lue,
**caractérisé en ce que** :
le document de sécurité (10) présente au moins un deuxième élément pelliculaire (3), qui affiche un deuxième effet à variation optique généré par une deuxième structure en relief (4) diffractive, sachant que le deuxième élément pelliculaire (3) au moins au nombre d'un est transparent ou est transparent au moins par endroits, et **en ce que** le deuxième élément pelliculaire (3) au moins au nombre d'un est fixé au moins par endroits sur le premier élément pelliculaire (2) au moins au nombre d'un tout comme sur les zones du substrat de support (1) ne présentant pas le premier élément pelliculaire (2) au moins au nombre d'un, sachant qu'au moins des zones de la première couche d'encre d'impression (5) au moins au nombre d'une sont disposées entre le premier élément pelliculaire (2) au moins au nombre d'un et le deuxième élément pelliculaire (3) au moins au nombre d'un et peuvent être lues à travers le deuxième élément pelliculaire (3) au moins au nombre d'un.

2. Document de sécurité selon la revendication 1, **caractérisé en ce que** :
la première information est fournie par des données personnelles d'un détenteur du document de sécurité (10).

3. Document de sécurité selon l'une quelconque des revendications 1 à 2,
**caractérisé en ce que** :
le premier effet à variation optique et le deuxième effet à variation optique sont adaptés l'un à l'autre de telle sorte que le premier élément pelliculaire (2) au moins au nombre d'un et le deuxième élément pelliculaire (3) au moins au nombre d'un fournissent ensemble une deuxième information.

4. Document de sécurité selon la revendication 3, **caractérisé en ce que** :
la deuxième information fournit des données personnelles d'un détenteur du document de sécurité (10).

5. Document de sécurité selon la revendication 3 ou 4,
**caractérisé en ce que** :
la deuxième information fournit une représentation holographique ou cinématographique.

6. Document de sécurité selon l'une quelconque des revendications 1 à 5,
**caractérisé en ce que** :
le document de sécurité (10) présente au moins une micropuce IC, et **en ce que** le premier film pelliculaire (2) au moins au nombre d'un et/ou le deuxième film pelliculaire (3) au moins au nombre d'un présentent une couche électroconductrice, la/les couche(s) électroconductrice(s) étant reliée(s) de manière électrique à la micropuce IC.

7. Document de sécurité selon l'une quelconque des revendications 1 à 6,
**caractérisé en ce que** :
la première couche d'encre d'impression (5) au moins au nombre d'une est déposée par impression sur le premier élément pelliculaire (2) au moins au nombre d'un et sur le substrat de support (1).

8. Document de sécurité selon l'une quelconque des revendications 1 à 6,
**caractérisé en ce que** :
la première couche d'encre d'impression (5) au moins au nombre d'une est déposée par impression sur le deuxième élément pelliculaire (3) au moins au nombre d'un.

9. Document de sécurité selon l'une quelconque des revendications 1 à 8,
**caractérisé en ce que** :
la deuxième couche d'encre d'impression (6) au moins au nombre d'une est déposée par impression par endroits sur le substrat de support (1).

10. Document de sécurité selon l'une quelconque des revendications 1 à 9,
**caractérisé en ce que** :
la première couche d'encre d'impression (5) au moins au nombre d'une est, si on l'observe sous un éclairage normal, transparente et sans couleur, et contient des substances luminescentes qui diffusent des couleurs dans le domaine de longueur d'ondes visibles sous l'effet d'un rayonnement UV.

11. Document de sécurité selon l'une quelconque des revendications 1 à 10,
**caractérisé en ce que** :
le premier élément pelliculaire (2) au moins au nombre d'un présente au moins une première couche transparente de plastique ou de vernis et au moins une première couche réfléchissante, sachant que la première structure en relief diffractive est déformée dans une première interface située entre la première couche de plastique ou de vernis au moins au nombre d'une et la première couche réfléchissante au moins au nombre d'une.

12. Document de sécurité selon l'une quelconque des revendications 1 à 11,
**caractérisé en ce que** :
le deuxième élément pelliculaire (3) au moins au nombre d'un présente au moins une deuxième couche de plastique ou de vernis transparente et au moins une deuxième couche réfléchissante opaque ou transparente par endroits, sachant que la deuxième structure en relief diffractive est déformée dans une interface située entre la deuxième couche de plastique ou de vernis au moins au nombre d'une et la deuxième couche réfléchissante au moins au nombre d'une.

13. Document de sécurité selon l'une quelconque des revendications 1 à 12,
**caractérisé en ce que** :
au moins deux premiers éléments pelliculaires (2) sont présents.

14. Document de sécurité selon l'une quelconque des revendications 1 à 13,
**caractérisé en ce que** :
au moins deux deuxièmes éléments pelliculaires (3) sont présents.

15. Procédé servant à fabriquer un document de sécurité (10) selon l'une quelconque des revendications 1 à 14, comprenant les étapes suivantes consistant à :
- fournir le substrat de support (1) ;
- fournir un film de transfert, qui présente un film de support et une couche de transmission pouvant être détachée du film de support ;
- fixer des zones de la couche de transmission du film de transfert sur le substrat de support (1), lesquelles forment le premier élément pelliculaire (2) au moins au nombre d'un ;
- imprimer le premier élément pelliculaire (2) au moins au nombre d'un et les zones du substrat de support (1) ne présentant pas ce/ces dernier(s), ou imprimer le deuxième élément pelliculaire (3) au moins au nombre d'un de la première couche d'encre d'impression (5) au moins au nombre d'une ;
- fixer le deuxième élément pelliculaire (3) au moins au nombre d'un sur le premier élément pelliculaire (2) au moins au nombre d'un et sur des zones du substrat de support (1) ne présentant pas ce/ces dernier(s), de telle manière qu'au moins des zones de la première couche d'encre d'impression (5) au moins au nombre d'une sont disposées entre le premier élément pelliculaire (2) au moins au nombre d'un et le deuxième élément pelliculaire (3) au moins au nombre d'un et peuvent être lues à travers le deuxième élément pelliculaire (3) au moins au nombre d'un.
